(19) Europäisches Patentamt
European Patent Office
Office européen des brevets

(11) Publication number: **0 095 324**
**B1**

(12) # EUROPEAN PATENT SPECIFICATION

(45) Date of publication of patent specification: **09.07.86**

(51) Int. Cl.$^4$: **G 03 C 5/54** // C09B27/00

(21) Application number: **83302850.9**

(22) Date of filing: **19.05.83**

(54) **Photographic recording material employing a nondiffusible magenta dye-releasing compound or precursor thereof.**

(30) Priority: **21.05.82 US 380843**

(43) Date of publication of application:
**30.11.83 Bulletin 83/48**

(45) Publication of the grant of the patent:
**09.07.86 Bulletin 86/28**

(84) Designated Contracting States:
**DE FR GB**

(56) References cited:
**EP-A-0 095 127**
**US-A-4 148 642**
**US-A-4 165 238**
**US-A-4 183 753**
**US-A-4 287 292**

(73) Proprietor: **EASTMAN KODAK COMPANY**
**343 State Street**
**Rochester New York 14650 (US)**

(72) Inventor: **Evans, Steven**
**518 Winona Boulevard**
**Rochester New York 14617 (US)**
Inventor: **Elwood, James K.**
**990 Racoon Run**
**Victor New York 14564 (US)**
Inventor: **Bailey, Joseph**
**Kodak Works Headstone Drive**
**Harrow Middlesex (GB)**
Inventor: **Clarke, David**
**Kodak Works Headstone Drive**
**Harrow Middlesex (GB)**
Inventor: **Johnston, Linda Grace**
**Kodak Works Headstone Drive**
**Harrow Middlesex (GB)**

(74) Representative: **Baron, Paul Alexander Clifford et al**
**Kodak Limited Patent Department**
**Headstone Drive**
**Harrow Middlesex HA1 4TY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 095 324 B1**

**Description**

This invention relates to a photographic recording material employing a novel, nondiffusible magenta dye-releasing compound which, as a function of development of a silver halide emulsion layer, releases a diffusible magenta dye. The dye-releasing compound can be premetallized or a metal complex of the released dye can be formed in an image-receiving layer.

Metallizable magenta dyes are known from U.S. Patents 4,207,104 (pyridylazonaphthols) and 4,287,292 (*o*-carboxyarylazopyridinediols). However, these prior art dyes are not entirely suitable for commercial use due to their relatively broader band widths and unwanted absorption as is shown below by comparative tests.

A photographic recording material in accordance with this invention comprises at least one photosensitive silver halide emulsion layer having associated therewith a dye image-providing compound which is capable of releasing at least one diffusible magenta dye moiety of the 8-(2-heterocyclylazo)-5-quinolinol type, said image providing compound having the following structural formula:

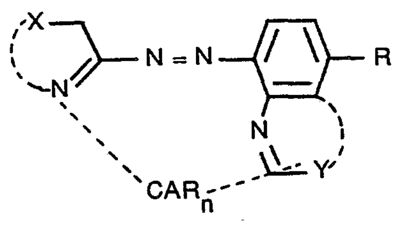

wherein:

(a) X represents the atoms necessary to complete a 5- or 6-membered heterocyclic ring which can be unsubstituted or substituted;

(b) Y represents the atoms necessary to complete a 9- or 10-membered heterocyclic fused ring system which can be unsubstituted or substituted;

(c) CAR represents a ballasted carrier moiety capable of releasing the diffusible magenta dye moiety as a function of development of the silver halide emulsion layer under alkaline conditions;

(d) R represents a hydroxy group, a salt thereof, or a hydrolyzable precursor thereof, or CAR which is linked to the dye moiety through an oxygen atom thereon; and

(e) n is 0, 1 or 2, with the proviso that when n is 0, then R is CAR which is linked to the dye moiety through an oxygen atom thereon.

The invention provides a photographic recording material employing an improved magenta dye-releasing compound containing chelating dye moieties, so that the dye which is released imagewise during processing, which can be premetallized or metallizable, can diffuse to an image-receiving layer to form a metal-complexed, dye transfer image having narrower bandwidths, minimum unwanted absorption outside the green region of the spectrum, desirable hues, rapid diffusion rates and shorter access times than those of the prior art, as well as good stability to heat, light and chemical reagents.

Typical 5 or 6 membered rings which X can represent include pyridine, pyrazine, pyrazole, imidazole, pyrimidine, thiazole, oxazole and thiazoline.

Typical heterocyclic fused rings which Y and the benzene ring to which it is fused complete include quinoline, quinoxaline, benzimidazole and indolenine.

Preferably, R is hydroxy, X represents the atoms necessary to complete a pyridine, imidazole or pyrazole ring and Y represents the atoms necessary to complete a quinoline, quinoxaline or benzimidazole ring. In another preferred embodiment R is hydroxy, X represents the atoms necessary to complete a pyridine ring, Y represents the atoms necessary to complete a quinoline ring, n is 1 and CAR is attached to the pyridine ring.

As stated above, R can be a hydroxy group, a salt thereof, such as a sodium salt or a tetramethylammonium salt, or a hydrolyzable precursor thereof, or CAR. Hydrolyzable precursors of a hydroxy group include acetate, benzoate, pivalate, carbamates, an acyloxy group having the formula —$OCOR_1$, $OCOOR_1$ or —$OCON(R_1)_2$, wherein each $R_1$ is an alkyl group having 1 to 8 carbon atoms, such as methyl, ethyl, isopropyl or butyl, or an aryl group having from 6 to 12 carbon atoms, such as phenyl, or any of the blocking groups which can be cleaved by an intramolecular nucleophilic displacement reaction, as disclosed in U.S. Patent 4,310,612.

When R is CAR or a hydrolyzable precursor of a hydroxy group, the absorption of the dye-releasing compound is shifted out of the green region of the spectrum. As a result of this shift the compound can be incorporated in a silver halide emulsion layer.

In another embodiment CAR can have attached thereto two azo dye moieties in which case two dye moieties will be released from one CAR moiety.

Substituents can be present in the two rings illustrated above. These include alkyl or acyl of from 1 to 6 carbon atoms, aryl of from 6 to 10 carbon atoms, aralkyl of 7 to 12 carbon atoms, amino, alkylsulfonyl or alkoxy wherein the alkyl moiety has from 1 to 6 carbon atoms, halogens such as chloro or bromo, morpholino, phenylsulfamoyl, solubilizing groups such as sulfonamido, sulfamoyl, carboxy, sulfo or hydrolyzable precursors thereof.

In another preferred embodiment the dye-releasing compounds described above can be premetallized, i.e., they can comprise a coordination complex of the nondiffusible compounds and a polyvalent metal ion. In a further preferred embodiment of the invention, the coordination complex comprises a 2:1 complex of the nondiffusible compound and a divalent or trivalent hexacoordinate metal ion. Such metal ions include zinc(II), nickel(II), copper(II), cobalt(II) and cobalt(III). Especially good results are obtained with nickel(II) ions.

There is great latitude in selecting a CAR moiety which is attached to the dye-releasing compounds described above. Depending upon the nature of the ballasted carrier selected, various groups may be needed to attach or link the carrier moiety to the dye. Such linking groups are considered to be a part of the CAR moiety in the above definition. It should also be noted that, when the dye moiety is released from the compound, cleavage may take place in such a position that part or all of the linking group, if one is present, and even part of the ballasted moiety, may be transferred to the image-receiving layer, along with the dye moiety. In any event, the dye nucleus as shown above can be thought of as the minimum which is transferred.

CAR moieties useful in the invention are described below:

| Dye Release Mechanism | Prior Art Reference |
|---|---|
| by chromogenic coupling | U.S. Patents 3,227,550; 3,227,552; 3,628,952 and 3,844,785 |
| by intramolecular ring closure | U.S. Patents 3,443,939 and 3,443,940 |
| from hydroquinone derivatives | U.S. Patents 3,698,897 and 3,725,062 |
| from a hydroquinonyl-methyl quaternary salt | U.S. Patent 3,728,113 |
| silver ion induced dye release | U.S. Patent 3,443,941 and 3,719,489 |
| by a dye bleach process | U.K. Patent Publication 2,017,950A |
| by oxidation and deamidation | U.S. Patents 3,928,312; 3,993,638; 4,053,312; 4,055,428; 4,076,529; 4,149,892; 4,179,231 and 4,198,235 |
| by miscellaneous mechanisms | *Research Disclosure* 14447, April 1976; U.S. Patents 3,980,479; 4,139,379; 4,199,354 and 4,232,107 and European Patent Publication 12908. |

When R is CAR, linkage must be to the dye moiety through an oxygen atom thereon, so that a phenol having a heterocyclic ring fused thereto is released from the nondiffusible compound under alkaline conditions. Such CARs are disclosed, for example, in U.S. Patent 4,139,379 noted above.

Representative dye-releasing compounds useful in this invention include the following:

Metallizable Compounds

(1)

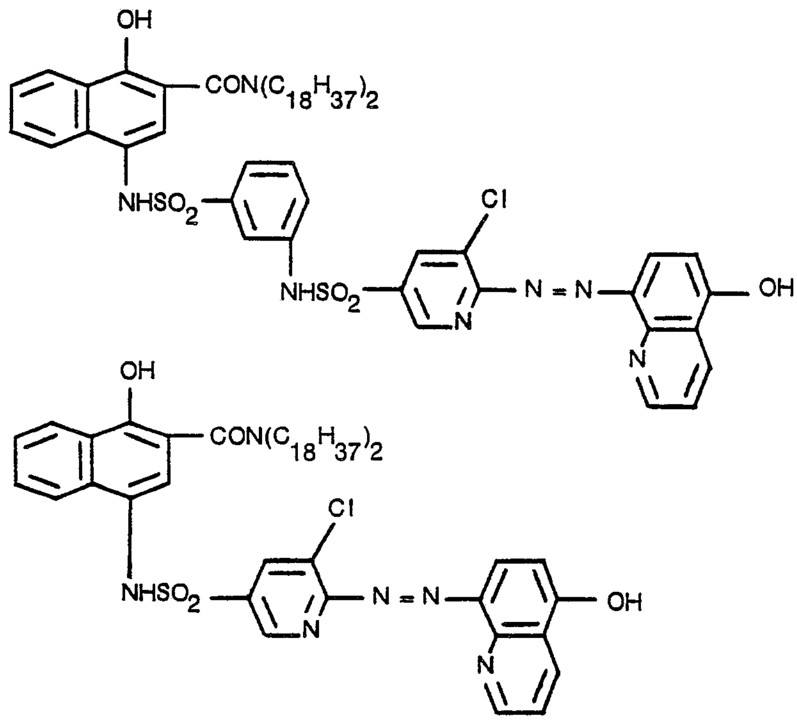

(2)

Compounds 3–6

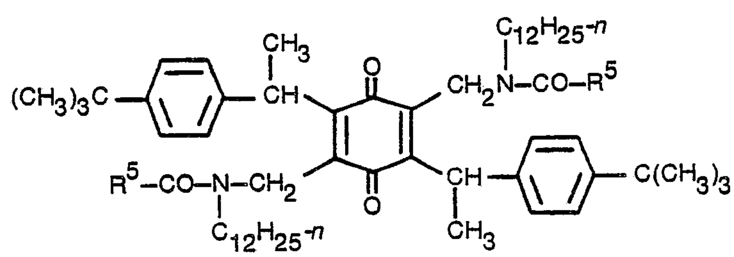

wherein:

(3) $R^5$ is

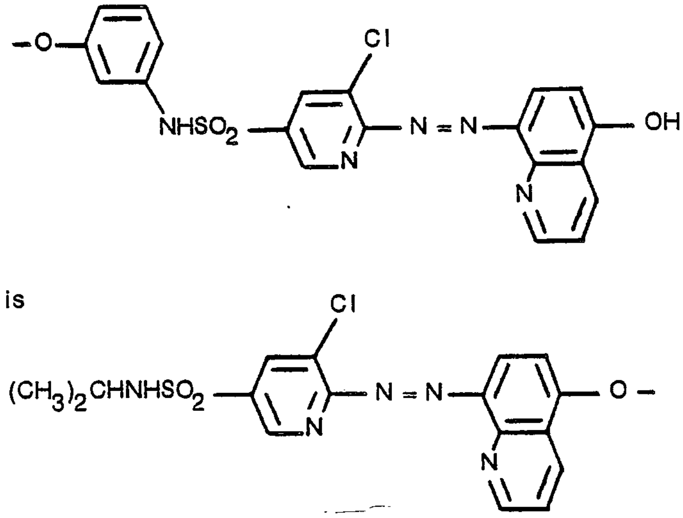

(4) $R^5$ is

(5) $R^5$ is

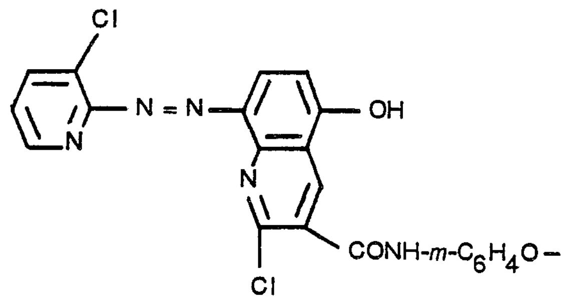

(6) $R^5$ is

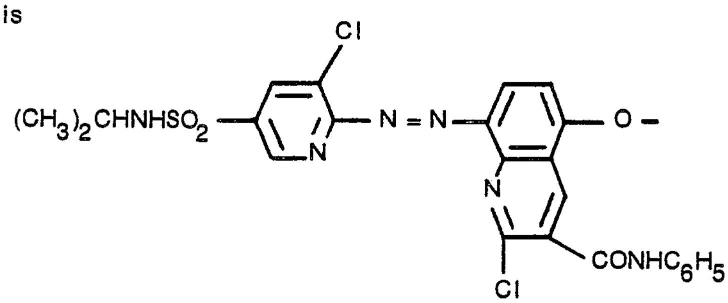

Compounds 7–9

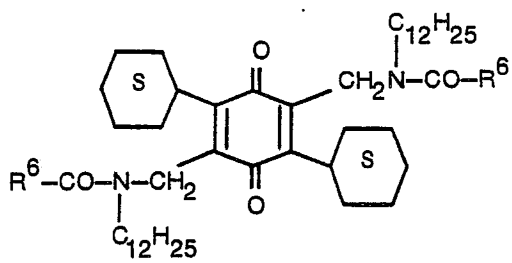

wherein:

(7) $R^6$ is

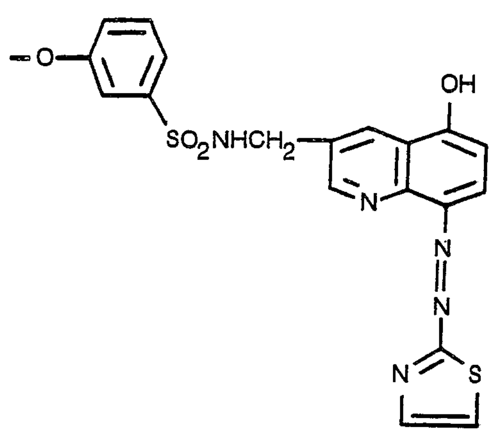

(8) $R^6$ is

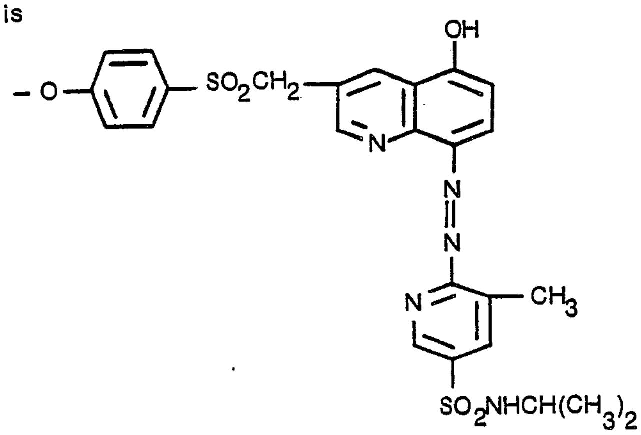

(9) $R^6$ is

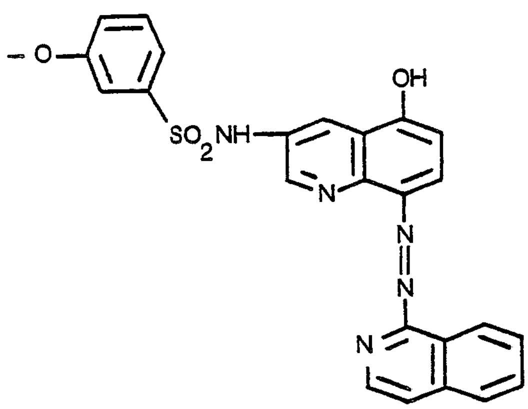

Compound 10

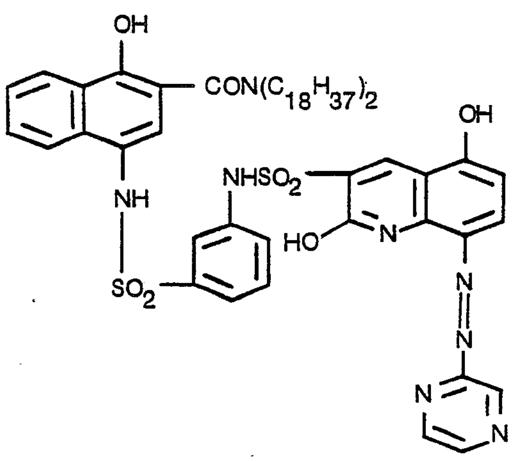

Compound 11

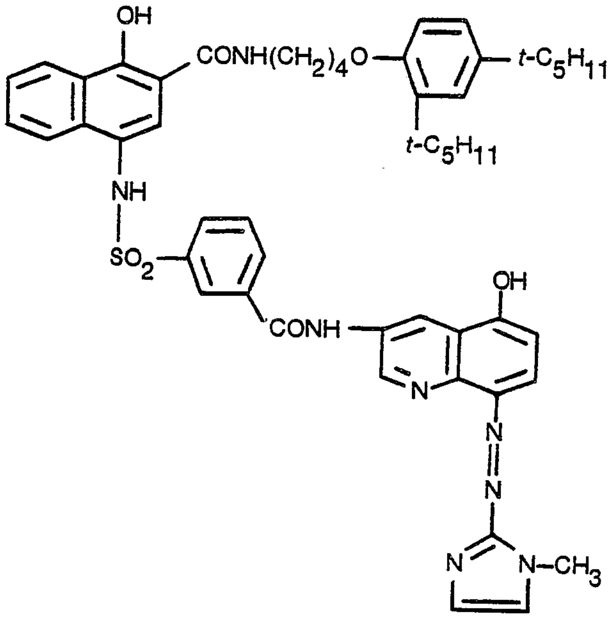

Compounds 12—13

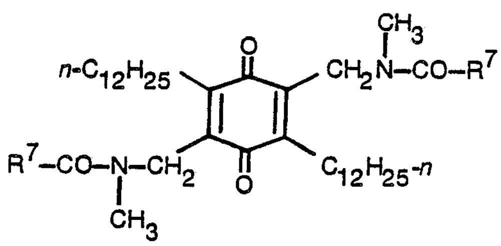

wherein:

(12) $R^7$ is

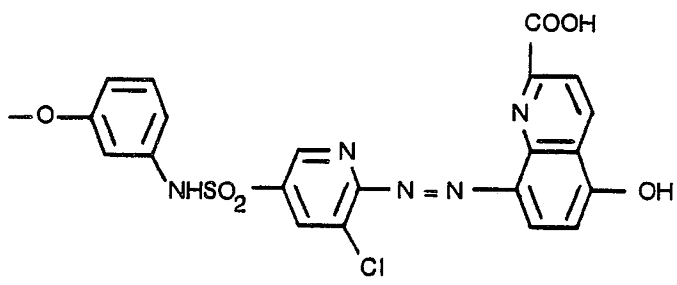

(13) $R^7$ is

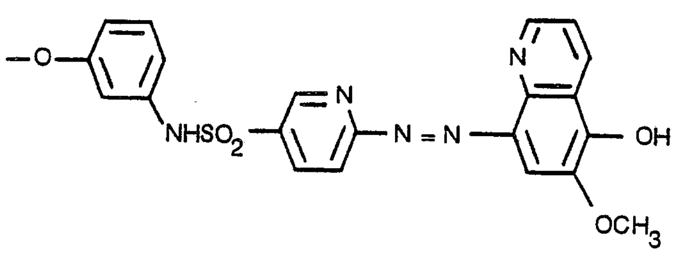

Premetallized Compounds

Compounds 14–20

(14)

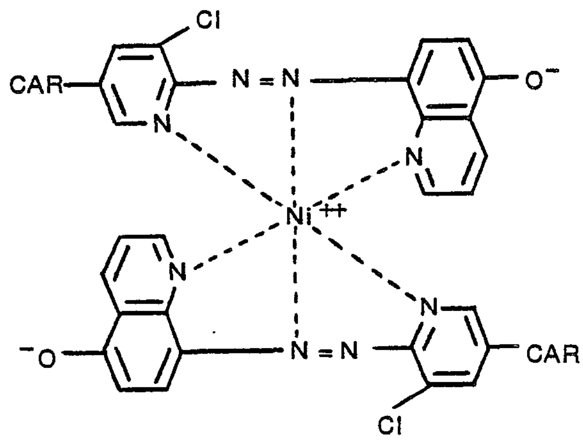

(15)

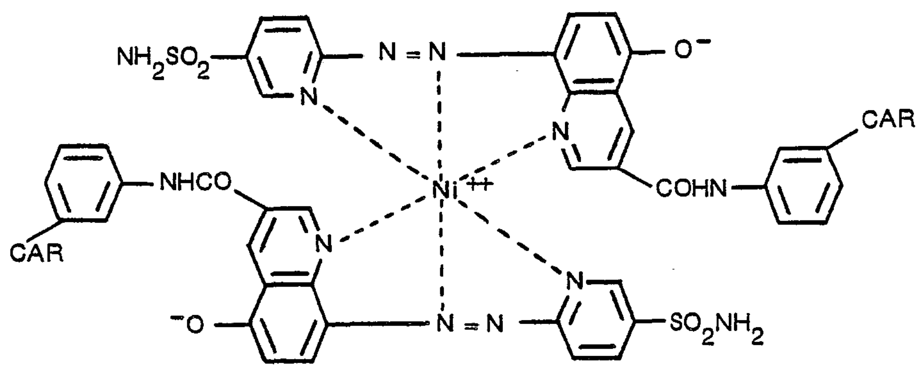

(16)

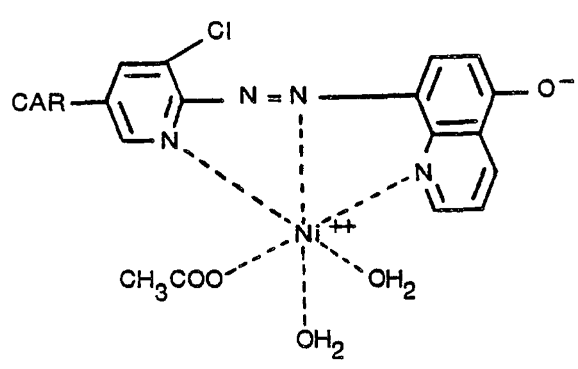

(17)

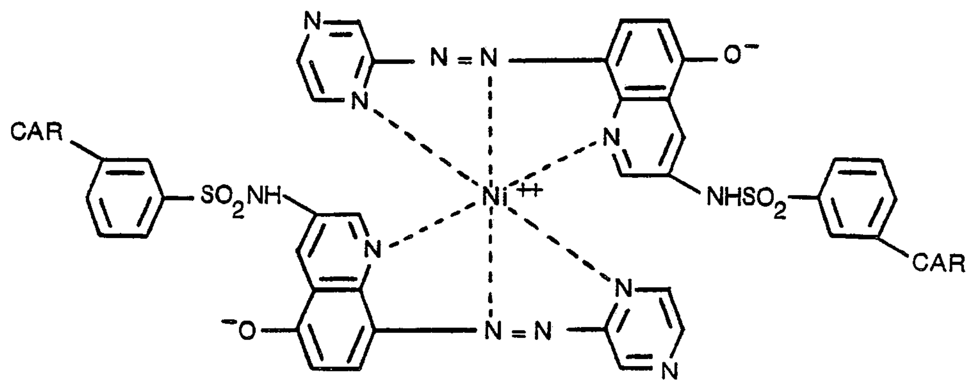

(18)

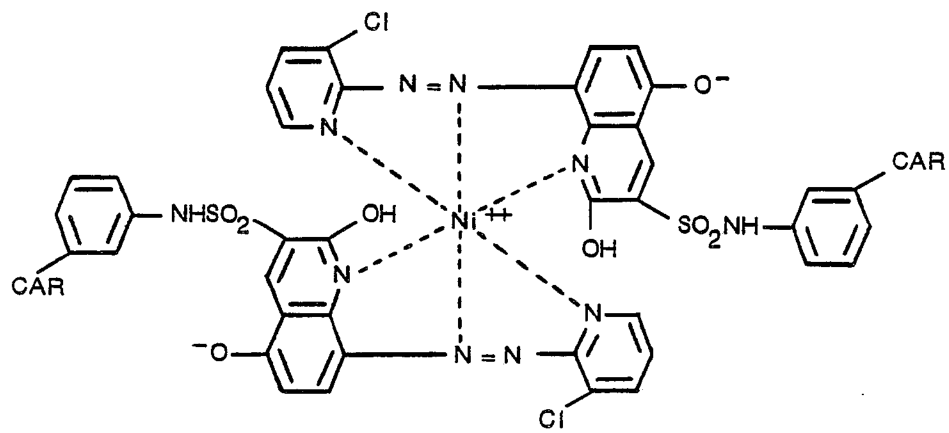

(19)

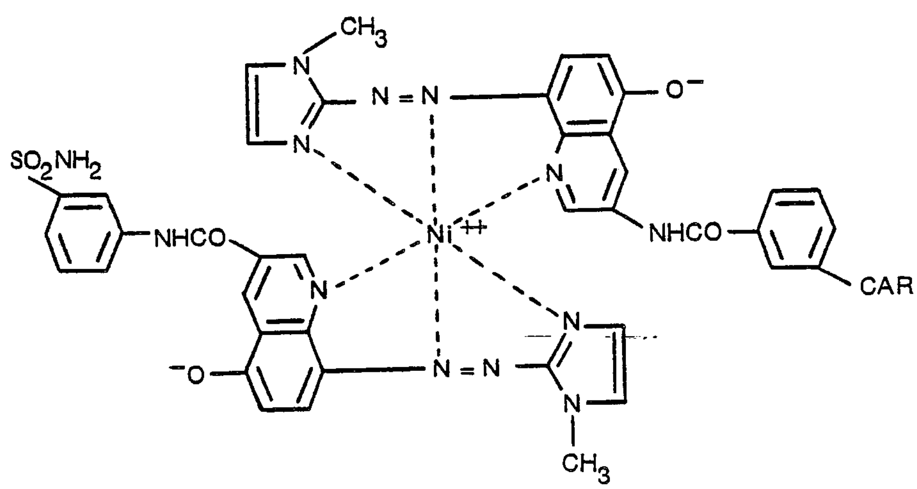

(20)

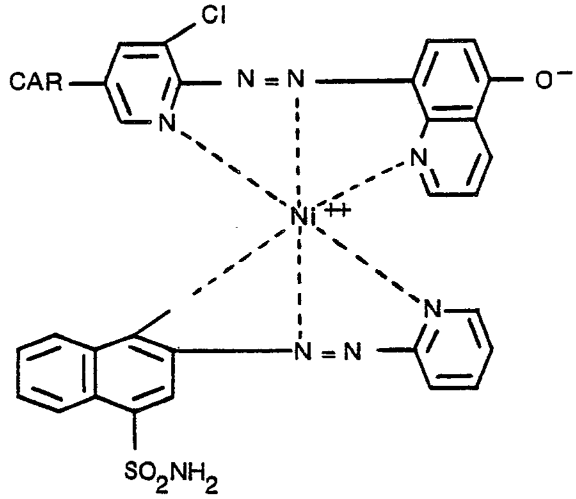

wherein CAR is

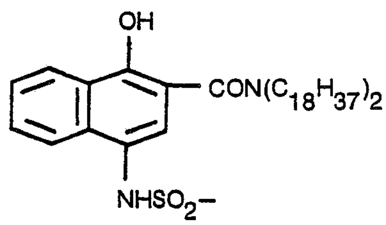

Compounds 21–22

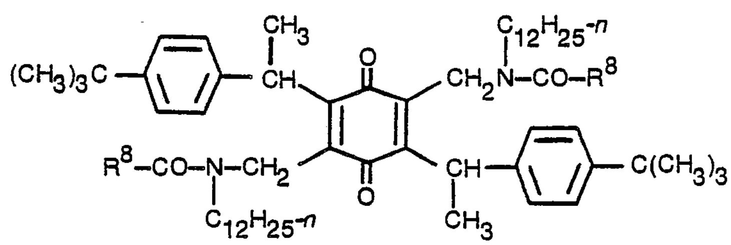

(21) wherein $R^8$ is

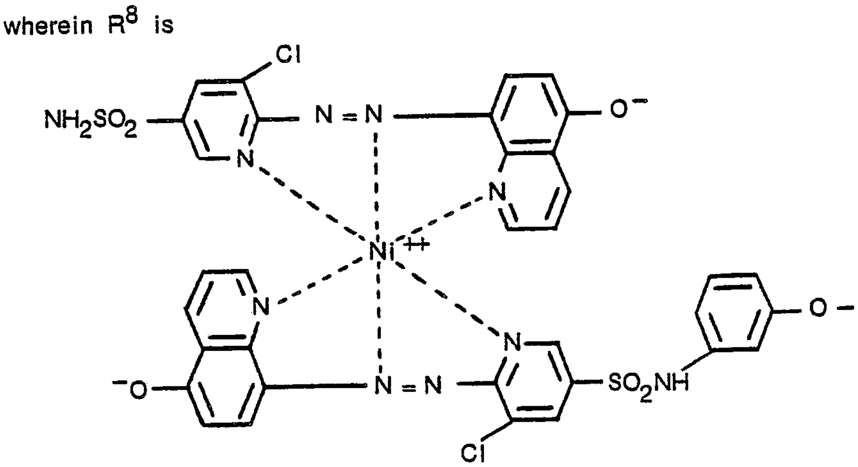

(22) wherein $R^8$ is

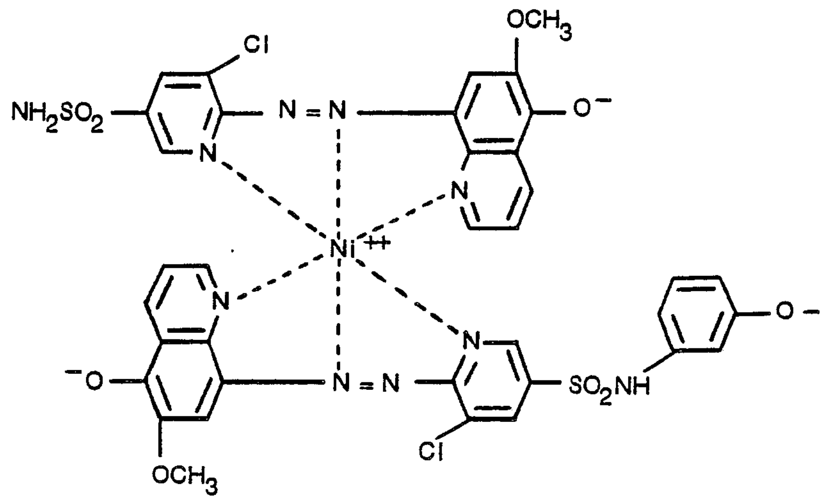

Compound 23

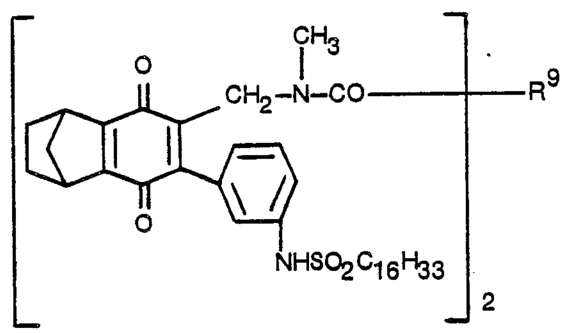

wherein $R^9$ is

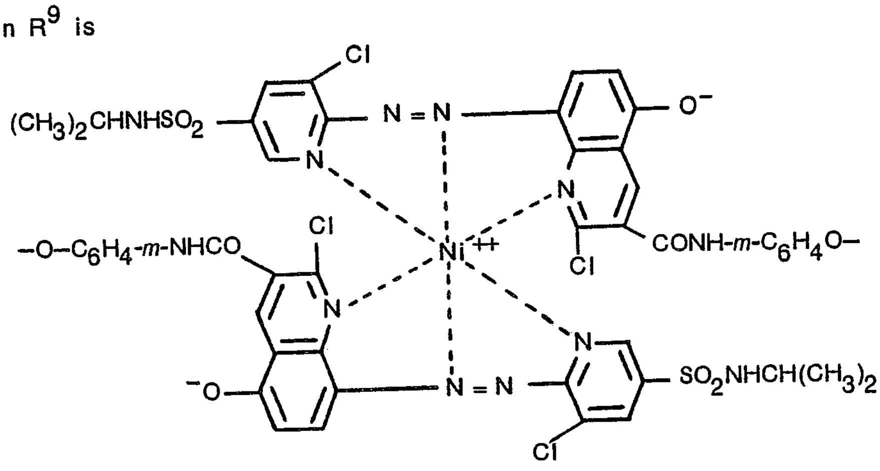

A process for producing a photographic transfer image in color utilizing photographic recording materials as described herein comprises:

(a) treating such a recording material having a metallizable dye-releasing compound with an alkaline processing composition in the presence of a silver halide developing agent to effect development of each exposed silver halide emulsion layers;

(b) the dye-releasing compound then releasing the diffusible azo dye imagewise as a function of the development of each of the silver halide emulsion layers;

(c) at least a portion of the imagewise distribution of the azo dye diffusing to a dye image-receiving layer; and

(d) contacting the imagewise distribution of azo dye with metal ions, thereby forming a metal-complexed azo dye transfer image.

The magenta azo dye moiety which is released from the metallizable dye-releasing compounds described above is a tridentate ligand. This ligand will form a coordination complex in the image-receiving layer with polyvalent metal ions. The metal ions can be present in the image-receiving layer itself or in a layer adjacent thereto. Alternatively, the image-receiving layer can be contacted with metal ions in a bath after diffusion of the dye has taken place. Metal ions most useful in the invention are those which are essentially colorless when incorporated into the image-receiving element, are inert with respect to the silver halide layers, react readily with the released dye to form a complex of the desired hue, are tightly coordinated to the dye in the complex, have a stable oxidation state, and form a dye complex which is stable to heat, light and chemical reagents. Good results are obtained with polyvalent metal ions such as copper(II), zinc(II), nickel(II), platinum(II), palladium(II), cobalt(II) and cobalt(III) ions.

It is believed that the coordination complex which can be formed from the tridentate, metallizable azo dye ligand has the following structural formula:

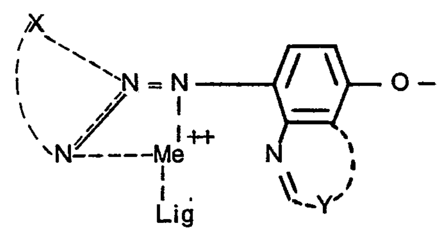

wherein:

X and Y are as defined above;

Me is metal; and

Lig is one or more ligand groups, depending upon the coordination number of the metal ion, such as $H_2O$, Cl or pyridine, a second dye moiety or a part of a polymer. (A divalent metal ion in solution always has a number of ligand groups attached to it depending upon its coordination number and the relative reactivity of various ligand groups such as water, ammonia, chloride, pyridine or acetate, which may be in the solution environment of the metal ion. These ligands can be displaced by a tridentate azo dye ligand which forms a more stable complex.)

Thus, in accordance with a preferred embodiment a photographic recording material is provided which comprises a support having thereon a coordination complex of a polyvalent metal ion and the dye image-providing material.

The photographic recording material will usually contain a mordant or image-receiving layer to bind the dye or coordination complex.

After processing the photographic recording material described above, there remains in it, after transfer has taken place, an imagewise distribution of azo dye in addition to developed silver. A color image comprising residual nondiffusible compound is obtained in this recording material if the residual silver and silver halide are removed by any conventional manner well known to those skilled in the photographic art, such as a bleach bath, followed by a fix bath or a bleach-fix bath. Such a retained dye image should normally be treated with metal ions to metallize the dyes to increase their light fastness and shift their spectral absorption to the intended region. The imagewise distribution of azo dye may also diffuse out of the recording material into these baths, if desired, rather than to an image-receiving element. If a negative-working silver halide emulsion is employed a positive color image, such as a reflection print, a color transparency or a motion picture film, is produced in this manner. If a direct-positive silver halide emulsion is employed a negative color image is produced.

A photographic recording material as described above is adapted to be processed by an alkaline processing composition to effect or initiate development. The recording material may also comprise a dye image-receiving layer.

The photographic recording material preferably contains the alkaline processing composition and means containing same for discharge within the material. There can be employed, for example, a rupturable container which is adapted to be positioned during processing so that a compressive force applied to the container by pressure-applying members, such as would be found in a camera designed for in-camera processing, will effect a discharge of the container's contents within recording material.

The dye image-receiving layer may itself contain metal ions or the metal ions may be present in an adjacent layer, so that the tridentate, metallizable azo dye ligand which is released will form a coordination complex therewith. The dye thus becomes immobilized in the dye image-receiving layer and metallized at the same time. Alternatively, the dye image in the dye image-receiving layer may be treated with a solution containing metal ions to effect metallization. The formation of the coordination complex shifts the absorption of the dye to the desired hue, usually to longer wavelengths, which have a different absorption than that of the initial dye-releasing compound. If this shift is large enough, then the dye-releasing compound may be incorporated in a silver halide emulsion layer without adversely affecting its sensitivity. Otherwise the dye-releasing compound can be contained in a layer contiguous to the silver halide emulsion layer. Either conventional negative-working or direct-positive silver halide emulsions can be employed.

The concentration of the dye-releasing compounds that are employed in the present invention may be varied over a wide range, depending upon the particular compound employed and the results which are desired. For example, the dye-releasing compounds may be coated in layers at a concentration of 0.1 to 3 g/$m^2$ by using coating solutions containing between 0.5 and 8 percent by weight of the dye-releasing compound distributed in a hydrophilic film-forming natural material or synthetic polymer, such as gelatin or polyvinyl alcohol, which is adapted to be permeated by aqueous alkaline processing composition.

Preferably, the silver halide developer or electron transfer agent (ETA) employed in the process becomes oxidized upon development and reduces silver halide to silver metal. The oxidized developer then cross-oxidizes the dye-releasing compound. The product of cross-oxidation then undergoes alkaline hydrolysis, thus releasing an imagewise distribution of diffusible azo dye which then diffuses to the receiving layer to provide the dye image. The diffusible moiety is transferable in alkaline processing composition either by virtue of its self-diffusivity or by its having attached to it one or more solubilizing groups, for example, a carboxy, sulpho, sulphonamido, hydroxy or morpholino group.

The term "nondiffusing" used herein has the meaning commonly applied to the term in photography and denotes materials that, for all practical purposes, do not migrate or wander through organic colloid layers, such as gelatin, in the photographic recording materials of this invention in an alkaline medium, and preferably when processed in a medium having a pH of 11 or greater. The same meaning is to be attached to the term "immobile". The term "diffusible" has the converse meaning and denotes materials having the property of diffusing effectively through the colloid layers of the photographic recording materials in an alkaline medium. "Mobile" has the same meaning as "diffusible".

The term "associated therewith" is intended to mean that the materials can be in either the same or different layers, so long as the materials are accessible to one another.

The following examples are provided to further illustrate the invention.

Example 1

Released Dyes — Spectra, Light Stability and Dye Diffusion Tests

A receiving element was prepared comprising a poly(ethylene terephthalate) film support having thereon a nickel sulfate hexahydrate (0.58 g/$m^2$)/gelatin (1.08 g/$m^2$) metal complexing layer, and a poly(4-vinylpyridine)/gelatin mordant layer (each at 2.15 g/$m^2$).

An alternative receiving element was used with the premetallized dye-complexes. It comprised a poly-(ethylene terephthalate) film support having thereon a layer of gelatin (1.1 g/$m^2$) and a mordant layer of poly(styrene-*co*-1-vinylimidazole-*co*-3-benzyl-1-vinylimidazolium chloride) (weight ratio 50:40:10) (4.5 g/$m^2$) and gelatin (2.2 g/$m^2$).

These receiving elements were immersed in alkaline solutions of the azo dyes listed below in Table I. The elements were removed from the dye solutions, washed in distilled water, placed in a pH 7.0 buffer solution and dried. Transmission spectra obtained on each receiving element of the mordanted dyes were normalized by computer to a density of 1.0. The characteristic wavelength of the dye, $\lambda_{1/2}$ in nm, is the mean of the wavelength limits of the absorption at half the maximum density. The HBW ("half band width") in nm is the range or distance between those limits. A narrow HBW generally designates a purer hue. The dye solution spectrum in 3:1 dioxane:water at pH 7 in the presence of excess nickel ion is also given.

The above receiving elements at pH 7 were then subjected to 10 days irradiation by a high intensity daylight (HID), 6000W Xenon arc lamp, each element receiving 50,000 lux through a Wratten 2B (ultraviolet) filter at 38°C. The percent fade represents the loss in density at $\lambda_{max}$ after irradiation.

Dye Diffusion Tests

Some of the released dyes in Table I were subjected to the conditions of two different dye diffusion tests. One, the "solution test", involved dissolving each dye in a viscous composition and transferring it through a receiving element which contains an opaque and reflecting layer in addition to the mordant layer. The other, a "gel pad test" involved imbibing the dye from solution into a thick gelatin layer, and then transferring it by direct lamination to the same receiving element which had been preswollen by soaking 5 minutes in a solution of 0.1 potassium hydroxide. The receiver for these tests had the following composition (coverages are parenthetically given in g/$m^2$):

A transparent poly(ethylene terephthalate) film support coated with

1) a mordant layer of poly(styrene-*co*-N-vinylbenzyl-N-benzyl-N,N-dimethylammonium chloride-*co*-divinylbenzene) (weight ratio 49.5:49.5:1) (2.28) and gelatin (2.28);

2) an opaque layer of carbon black (1.88) in gelatin (1.23);

3) a reflecting layer of titanium dioxide (16.1) in gelatin (2.63); and

4) an overcoat layer of gelatin (4.3).

Solution Test

Approximately 0.075 mmol of the unmetallized released dye was dissolved in 10 ml of 0.125 N potassium hydroxide. After the dye was completely dissolved, 20 ml of a viscous composition was added. The resulting solution, stirred for at least 20 minutes, was 0.0025 M in dye at a pH of 13.4. The viscous composition was prepared from 46.2 g potassium hydroxide and 54 g carboxymethylcellulose dissolved in

1200 ml water. The dye solution was then spread between the receiver and a clear polyester cover sheet. This sandwich was then passed between spaced rollers so that the gap containing the viscous solution had a thickness of 102 µm. Measurement of the rate of dye diffusion was commenced at the point at which half of the sandwich, or laminate, had passed through the rollers. The appearance of dye on the mordant was measured at $\lambda_{max}$ as diffuse reflection density vs. time. The reflection density was converted to transmission density. A plot of transmission density, which is proportional to concentration vs. time, was derived. Calculation was made of the value of t-1/2 of dye transfer, the time in seconds required to obtain one-half of the maximum transmission density.

Gel Pad Test

A donor element, containing a thick pad of deionized acid-processed gelatin (26 g/m$^2$) hardened with 2 percent bis(vinylsulfonylmethyl)ether, was imbibed with a solution of 0.1 M in potassium hydroxide and $1.3 \times 10^{-3}$ M in dye. The pad was soaked to full penetration, surface wiped, and then laminated in direct contact to the above receiving element which had been presoaked for 5 minutes at 0.1 M KOH. The t-1/2 of dye transfer was obtained as in the solution test. The diffusion times by the "gel pad test" are substantially longer than by the "solution test".

For comparison, the 2:1 nickel complex of 2(2-pyridylazo)-4-sulfamoyl-1-naphthol, the chromophore of which is described in Dye 26 of U.S. Patent 4,207,104, has solution and gel pad dye diffusion t-1/2 values of 49 and 281 sec., respectively. A 2:1 nickel complex of 2-(5-sulfamoyl-2-pyridylazo)-5-(N-methylanilino)-phenol, the chromophore of which is described in Compound D of European Published Patent Specification 0070481 (Application No. 82 106 192.6) has solution and gel pad dye diffusion t-1/2 values of 45 and 265 sec., respectively.

Various results from fade tests and/or from dye diffusion tests are reported in Table 1.

TABLE I
Released Dyes

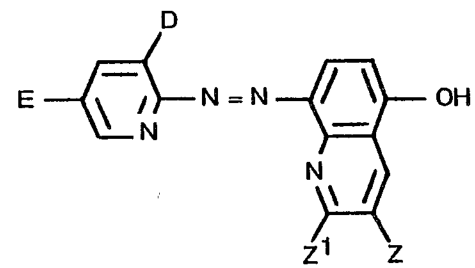

| Cmpd. | D | E | $Z^1$ | Z | Spectra of Ni-Dye Complexes: Dye Solution $\lambda_{1/2}$ (nm) | Dye Solution HBW (nm) | Mordant $\lambda_{1/2}$ (nm) | Mordant HBW (nm) | % Fade | Dye Diffusion $t_{1/2}$ (sec) Soln. | Dye Diffusion $t_{1/2}$ (sec) Gel Pad |
|---|---|---|---|---|---|---|---|---|---|---|---|
| A | Cl | $SO_2NH$-*m*-$C_6H_4SO_2NH_2$ | H | H | 548 | 70 | 553 | 76 | 2 | 41 | 183 |
| *A′ | Cl | $SO_2NH$-*m*-$C_6H_4SO_2NH_2$ | H | H | 545 | 68 | 555 | 85 | 3 | — | 235 |

* premetallized compound, alternative receiving element

TABLE I (continued)

| Cmpd. | D | E | $Z^1$ | Z | Spectra of Ni-Dye Complexes: Dye Solution $\lambda_{1/2}$ (nm) | Dye Solution HBW (nm) | Mordant $\lambda_{1/2}$ (nm) | Mordant HBW (nm) | % Fade | Dye Diffusion $t_{1/2}$ (sec) Soln. | Dye Diffusion $t_{1/2}$ (sec) Gel Pad |
|---|---|---|---|---|---|---|---|---|---|---|---|
| B | Cl | $SO_2NH_2$ | H | H | 543 | 65 | 545 | 67 | 0 | 31 | 108 |
| *B′ | Cl | $SO_2NH_2$ | H | H | 544 | 68 | 546 | 71 | 4 | — | 161 |
| C | $OCH_3$ | $SO_2NH$-*t*-$C_4H_9$ | H | H | 560 | 79 | 563 | 82 | — | 37 | — |
| D | Cl | $SO_2NH$-$CH(CH_3)_2$ | H | H | 543 | 68 | 547 | 66 | — | 44 | — |
| E | Cl | $SO_2NH$-*m*-$C_6H_4$-OH | H | H | 544 | 65 | 550 | 70 | 1 | 39 | — |

* premetallized compound, alternative receiving element

TABLE I (continued)

| Cmpd. | D | E | $Z^1$ | Z | Spectra of Ni-Dye Complexes: Dye Solution $\lambda_{1/2}$ (nm) | Dye Solution HBW (nm) | Mordant $\lambda_{1/2}$ (nm) | Mordant HBW (nm) | % Fade |
|---|---|---|---|---|---|---|---|---|---|
| F | Cl | $SO_2N(CH_3)$-*m*-$C_6H_4OH$ | H | H | 543 | 68 | 546 | 66 | 0 |
| G | Cl | $SO_2NHC_6H_5$ | H | H | 542 | 65 | 548 | 70 | 0 |
| H | Cl | $SO_2NHCH(CH_3)_2$ | Cl | CONH-*m*-$C_6H_4$-OH | 548 | 63 | 549 | 72 | 7 |
| I | Cl | $SO_2NH_2$ | Cl | CONH-*m*-$C_6H_4$-OH | 545 | 62 | 550 | 70 | 4 |
| J | $OCH_3$ | $SO_2NH$-*m*-$C_6H_4$-OH | H | H | 559 | 78 | 568 | 87 | 0 |

Example 2
Comparative Spectra

Example 1 was repeated to obtain spectrophotometric data on mordanted strips for the following:

a) a 2:1 nickel complex of 2-(2-pyridylazo)-4-sulfamoyl-1-naphthol, the chromophore of which is described in Dye 26 of U.S. Patent 4,207,104 (Control Dye 1);

b) a 2:1 nickel complex of 2-(5-sulfamoyl-2-pyridylazo)-5-(N-methylanilino)phenol, the chromophore of which is described in Compound D of European Application No. 82 106 192.6 (Control Dye 2);

c) a 2:1 nickel complex of 6-(2-carboxy-4-chlorphenylazo)-2,3-pyridinediol, the chromophore of which is described in Compound 23 of U.S. Patent 4,287,292 (Control Dye 3); and

d) a 2:1 nickel complex of Compound B (Table I).

The absorption of each of the metallized dyes is described by 1) the wavelength(s), $\lambda_{max}$, at the actual $D_{max}$, 2) the $\lambda_{1/2}$ which is the mean of the wavelength limits of the absorption at half the maximum density, and 3) the half band width (HBW) which is the band width at half the $D_{max}$. A narrow HBW generally designates a purer hue. The following results were obtained.

TABLE II

| | $\lambda_{max}$ (nm) | $\lambda_{1/2}$ (nm) | HBW (nm) |
|---|---|---|---|
| Control Dye 1 | 553, 567 | 537 | 101 |
| Control Dye 2 | 540, 572 | 540 | 116 |
| Control Dye 3 | 555 | 545 | 86 |
| Compound B | 560 | 545 | 67 |

The above results indicate that the metal dye complex of the invention has a substantially narrower band width and less unwanted absorption than any of the prior art metallized dyes. It will therefore provide a more accurate color reproduction than the broader absorbing metallized dyes of the prior art.

Synthesis of Compound 3

To a solution of 5.5 g (12.1 mmol) Compound E, 8-[3-chloro-5-(m-hydroxyphenylsulfamoyl)-2-pyridylazo]-5-quinolinol, in 200 ml tetrahydrofuran, 100 ml pyridine and 4.8 g (37.2 mmol) N,N-diisopropylethylamine was added 3.0 g (3.17 mmol) 3,6-bis(1-*p*-*t*-butylphenylethyl)-2,5-bis(N-*n*-dodecylchloroformamidomethyl)benzoquinone (see U.S. Patent 4,204,870, Col. 31). After stirring for 1 hour, an additional 2.5 g (2.64 mmol) of the acid chloride is added and the reaction stirred 28 hours at room temperature. The crude reaction mixture was concentrated to about 100 ml in vacuo at 40°C and the residue was partitioned between ethyl acetate and 3N HCl. The layers were separated, the organic phase washed with 3N HCl (until washings were acidic), water and saturated sodium chloride solution. After drying ($MgSO_4$) the organic phase was evaporated in vacuo and the residue recrystallized twice from 350—400 ml ethanol. Yield 7.5 g (72 percent) of yellow solid: $\varepsilon^{550} = 13.0 \times 10^4$ (3:1 dioxane-pH 6 buffer + excess $Ni^{2+}$).

Intermediates:

Compound E, 8-[3-Chloro-5-(*m*-hydroxyphenylsulfamoyl)-2-pyridylazo]-5-quinolinol

A solution of 5.0 g (31.4 mmol) quinoline-5,8-quinone [T. Urbanski and S. Krzyzanowski, *Roczniki Chem.*, *27*, 390 (1953); *Chem. Abstr.*, *49*, 1041b (1955)] in 50 ml ethyl alcohol and 100 ml tetrahydrofuran was chilled to <5°C. Concentrated HCl (1 ml) and a cold slurry of 10.0 g (31.8 mmol) 3-chloro-5-(*m*-hydroxyphenylsulfamoyl)-7-pyridylhydrazine in 100 ml ethyl alcohol/0.5 ml concentrated HCl were added in that order. The reaction was stirred at 0—10°C for 18 hours. The crude product was collected by filtration and dried to yield 5.8 g of an orange solid. Concentration of the filtrates afforded an additional 2.6 g of less pure material. The crude product was purified by recrystallization from $CH_3CN$ to yield 6.1 g (43 percent) of a yellow-orange solid: $\varepsilon^{550} = 6.6 \times 10^4$ (3:1 dioxane-pH 6 buffer + $Ni^{2+}$).

Synthesis of Compound 14

N,N-Di-*n*-octadecyl-4-(2-hydrazino-3-chloro-5-pyridinesulfonamido)-1-hydroxy-2-naphthamide (4.56 g; 0.005 mole) (European Patent Application No. 82 106 192.6, Example 2), acetone (15 ml) and conc. hydrochloric acid (2 drops) were mixed and heated at boiling for several minutes. The hydrazone product crystallized on cooling. Methanol was added (100 ml) and after cooling in ice the hydrazone was filtered, washed with methanol, and dried to yield 3.37 g (70.7 percent) of the acetone hydrazone.

This 3.37 g of hydrazone, benzoyl chloride (1.05 g; 0.0075 mole), triethylamine (0.81 g; 0.008 mole), and pyridine (50 ml) were stirred under nitrogen in a flask at room temperature for 60 hours. Subsequent

evaporation of the pyridine yielded a syrup which could not be made to crystallize upon treatment with aqueous methanol.

The above syrup, which was believed to comprise a mixture of benzoylated products was treated with a warm methanol-ether (1:1 by volume) solution containing a few drops of conc. hydrochloric acid. After cooling to room temperature and adding ether as necessary to maintain solution, 5,8-quinolinequinone (0.56 g; 0.0035 mole) was added followed by an hour of stirring. The resulting orange colored solution was transferred to a flask and degassed by bubbling nitrogen through the solution while stirring. Methanolic potassium hydroxide was then added until a deep magenta color was maintained. After stirring two hours at room temperature, hydrochloric acid was added until the magenta color disappeared. The resulting liquid was partially evaporated to remove ether, diluted with water, stirred one hour, and the resulting gummy solid was filtered.

Since the crude product would not crystallize, and its purity was unknown, it was dissolved in a 1:1 by volume methanol ether solution and treated with an excess of nickel acetate in methanol. After stirring 30 min. the solution was diluted with water and stirred for an hour allowing a small ether layer to evaporate. The product precipitated and was filtered and allowed to dry. The crude product was dissolved in ether and filtered to remove excess nickel acetate and any other inorganic salts. The ether solution was diluted with a methanol/ethanol (1:1) mixture and stirred for an hour as the metallized product separated. It was filtered and air dried to yield 1.8 g of a purple powder. The analytical data suggested that the product was a mixture of the 2:1 complex illustrated above as Compound 14 and the acetate of the 1:1 complex.

Calculated for the 2:1 complex: C, 67.7; H, 8.2; N, 7.8; Cl, 3.3; S, 3.0; Ni, 2.7;
Calculated for the 1:1 complex (acetate): C, 64.6; H, 7.8; N, 7.2; Cl, 3.0; S, 2.7; Ni, 5.0;
Found: C, 65.5; H, 8.2; N, 7.4; Cl, 2.4; S, 2.5; Ni, 3.4.

Example 3

Photographic Test

A photographic element was prepared by coating the following layers in the order recited on a transparent poly(ethylene terephthalate) film support. Coverages are parenthetically given in g/$m^2$ unless otherwise stated.

1) Layer of Compound 14 ($2.2 \times 10^{-4}$ moles/$m^2$) in 1/2 its weight of diethyllauramide, scavenging agent potassium 5-*s*-octadecylhydroquinone-2-sulfonate (0.022) and as a blocked developing agent 1-phenyl-2-pyrazolin-3-yl-N-methyl-N-[2-(N-methyltrifluoroacetamidomethyl)-4-(*p*-sulfonamido)phenyl]carbamate (0.54) in gelatin (2.8);

2) Green-sensitized silver chloride emulsion (0.39) in deionized gelatin (0.86), 1-(*m*-acetamidophenyl-2-tetrazoline-5-thione (350 mg/mole Ag), and octadecylquinone (5 g/mole Ag); and

3) overcoat layer of 2,5-di-*s*-dodecylhydroquinone (0.32) in deionized gelatin (0.54).

A receiving element was prepared by coating a mordant layer of a mixture of poly(N-vinylimidazole) (1.6 g/$m^2$) and gelatin (1.6 g/$m^2$) coated over a gelatin layer (0.81 g/$m^2$) containing nickel sulfate (0.11) on a polyethylene-coated paper support.

The photographic element was given a full exposure to $D_{max}$, then soaked for 15 seconds in an activator containing per liter of developer: 33.7 g potassium hydroxide, 2.0 g potassium bromide, 3.0 g 5-methylbenzotriazole, and 2.0 g 11-aminoundecanoic acid. The photographic element was then laminated to the receiver. The laminate was then cut into four pieces and placed on a constant temperature (24°C) block. The four receiver pieces were peeled off after 1, 3, 5 and 10 minutes, each dried and the Status A density recorded. The access time, taken as the first of the strips to achieve a constant density on the receiver, was 5 min. at a green density of 0.75. When the receiver was irradiated for 28 days with a 6000W Xenon arc lamp at 50 Klux through a Wratten 2B (ultraviolet) filter, the density loss was only 0.14.

Attention is directed to co-filed and co-pending EP—A—0095127 which discloses and claims a photographic recording material which comprises a nondiffusible dye image-providing compound capable of releasing a diffusible 6-heterocyclylazo-3-pyridinol cyan dye moiety.

**Claims**

1. A photographic recording material comprising at least one photosensitive silver halide emulsion layer having associated therewith a nondiffusible dye image-providing compound capable of releasing at least one diffusible magenta dye moiety characterized in that said compound has the structural formula:

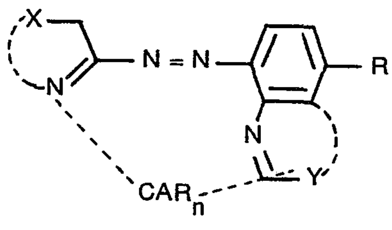

wherein:

(a) X represents the atoms necessary to complete a 5- or 6-membered heterocyclic ring which can be unsubstituted or substituted;

(b) Y represents the atoms necessary to complete a 9- or 10-membered heterocyclic fused ring system which can be unsubstituted or substituted;

(c) CAR represents a ballasted carrier moiety capable of releasing the diffusible magenta dye moiety as a function of development of the silver halide emulsion layer under alkaline conditions;

(d) R represents a hydroxy group, a salt thereof, or a hydrolyzable precursor thereof, or CAR which is linked to said dye moiety through an oxygen atom thereon; and

(e) n is 0, 1 or 2, with the proviso that when n is 0, then R is CAR which is linked to said dye moiety through an oxygen atom thereon.

2. A photographic recording material according to claim 1 characterized in that said dye image-providing compound comprises a coordination complex of said nondiffusible compound and a polyvalent metal ion.

3. A photographic recording material according to claim 1 characterized in that R is hydroxy and X represents the atoms necessary to complete a pyridine, imidazole or pyrazole ring.

4. A photographic recording material according to claim 1 characterized in that R is hydroxy and Y together with the benzene ring to which it is fused complete a quinoline, quinoxaline, benzimidazole or indolenine ring.

5. A photographic recording material according to claim 1 characterized in that said material also comprises a dye image-receiving layer.

6. A photographic recording material according to claim 5 characterized in that said material also contains metal ions in said dye image-receiving layer or in a layer adjacent thereto.

**Patentansprüche**

1. Photographisches Aufzeichnungsmaterial mit mindestens einer photosensitiven Silberhalogenidemulsionsschicht, der eine nicht-diffundierende, ein Farbstoffbild liefernde Verbindung zugeordnet ist, die mindestens einen diffundierenden Purpurrot-Farbstoffanteil freizusetzen vermag, dadurch gekennzeichnet, daß die Verbindung der folgenden Strukturformel entspricht:

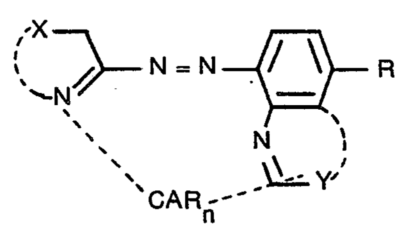

in der bedeuten:

(a) X die zur Vervollständigung eines 5- oder 6-gliedrigen heterocyclischen Ringes, der unsubstituiert oder substituiert sein kann, erforderlichen Atome;

(b) Y die zur Vervollständigung eines 9- oder 10-gliedrigen heterocyclischen kondensierten Ringsystems, das unsubstituiert oder substituiert sein kann, erforderlichen Atome;

(c) CAR einen eine Ballastgruppe aufweisenden Trägeranteil, der den diffundierenden Purpurrot-Farbstoffanteil in Abhängigkeit von der Entwicklung der Silberhalogenidemulsionsschicht unter alkalischen Bedingungen freizusetzen vermag;

(d) R eine Hydroxygruppe, ein Salz hiervon oder eine hydrolysierbare Vorläufergruppe hiervon, oder einen Trägeranteil CAR, der über ein Sauerstoffatom an den Farbstoffanteil gebunden ist und

(e) n gleich 0, 1 oder 2, wobei gilt, daß, wenn n gleich 0 ist, R die Bedeutung eines Trägeranteils CAR hat, der über ein Sauerstoffatom an den Farbstoffanteil gebunden ist.

2. Photographisches Aufzeichnungsmaterial nach Anspruch 1, dadurch gekennzeichnet, daß die ein Farbstoffbild liefernde Verbindung in Form eines Koordinationskomplexes aus der nicht-diffundierenden Verbindung und einem polyvalenten Metallion vorliegt.

3. Photographisches Aufzeichnungsmaterial nach Anspruch 1, dadurch gekennzeichnet, daß R für einen Hydroxyrest steht und X die zur Vervollständigung eines Pyridin-, Imidazol- oder Pyrazolringes erforderlichen Atome darstellt.

4. Photographisches Aufzeichnungsmaterial nach Anspruch 1, dadurch gekennzeichnet, daß R für einen Hydroxyrest steht und Y gemeinsam mit dem Benzolring, an den es ankondensiert ist, einen Chinolin-, Chinoxalin-, Benzimidazol- oder Indoleninring vervollständigt.

5. Photographisches Aufzeichnungsmaterial nach Anspruch 1, dadurch gekennzeichnet, daß es eine Farbstoffbildempfangsschicht aufweist.

6. Photographisches Aufzeichnungsmaterial nach Anspruch 5, dadurch gekennzeichnet, daß es ferner in der Farbstoffbildempfangsschicht oder in einer hierzu benachbarten Schicht Metallionen enthält.

**Revendications**

1. Produit pour l'enregistrement photographique comprenant au moins une couche d'émulsion photosensible aux halogénures d'argent à laquelle est associé un composé non diffusible formateur d'image de colorant capable de libérer au moins un radical de colorant magenta diffusible, caractérisé en ce que le dit composé a la formule:

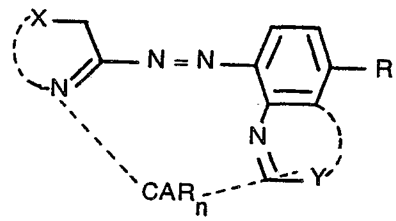

dans laquelle:

(a) X représente les atomes nécessaires pour compléter un noyau hétérocyclique à 5 ou 6 atomes qui peut être non substitué ou substitué;

(b) Y représente les atomes nécessaires pour compléter un système hétérocyclique à noyaux condensés comprenant 9 ou 10 atomes, qui peut être non substitué ou substitué;

(c) CAR représente un radical porteur ballasté capable de libérer ledit radical de colorant magenta diffusible en fonction du développement de ladite couche d'émulsion aux halogénures dans des conditions alcalines;

(d) R représente un groupe hydroxy, un sel d'un tel groupe, ou un précurseur hydrolysable d'un tel groupe, ou bien CAR qui est relié au dit motif de colorant par l'intermédiaire d'un atome d'oxygène de celui-ci; et

(e) n est égal à 0, 1 ou 2, avec la condition que, lorsque n est égal à 0, R est alors CAR qui est relié au dit radical de colorant par un atome d'oxygène de celui-ci.

2. Produit pour l'enregistrement photographique conforme à la revendication 1, caractérisé en ce que ledit composé formateur d'image de colorant comprend un complexe de coordination du dit composé non diffusible et d'un ion métallique polyvalent.

3. Produit pour l'enregistrement photographique conforme à la revendication 1, caractérisé en ce que R est un groupe hydroxy et X représente les atomes nécessaires pour compléter un noyau pyridine, imidazole ou pyrazole.

4. Produit pour l'enregistrement photographique conforme à la revendication 1, caractérisé en ce que R est un groupe hydroxy et Y complète, avec le noyau benzénique avec lequel il est condensé, un noyau quinoléine, quinoxaline, benzimidazole ou indolénine.

5. Produit pour l'enregistrement photographique conforme à la revendication 1, caractérisé en ce que ledit produit comprend aussi une couche réceptrice d'image de colorant.

6. Produit pour l'enregistrement photographique conforme à la revendication 5, caractérisé en ce que ledit produit contient aussi des ions métalliques dans ladite couche réceptrice d'image de colorant ou dans une couche adjacente à celle-ci.